# EUROPÄISCHE PATENTSCHRIFT

(11) **EP 2 838 726 B1**
(45) Veröffentlichungstag und Bekanntmachung des Hinweises auf die Patenterteilung: **04.05.2016**
(21) Anmeldenummer: 13702782.7
(22) Anmeldetag: 29.01.2013
(51) Int. Cl.: B32B 15/08, B32B 37/10, B23K 9/025

(54) **VERFAHREN ZUM HERSTELLEN MAßGESCHNEIDERTER LEICHTBLECHE**
METHOD FOR PRODUCING CUSTOMIZED LIGHTWEIGHT METAL SHEETS
PROCÉDÉ DE FABRICATION DE TÔLES LÉGÈRES SUR MESURE

(30) Priorität: 20.04.2012 DE 102012103472
(43) Veröffentlichungstag der Anmeldung: 25.02.2015
(73) Patentinhaber: ThyssenKrupp Steel Europe AG, 47166 Duisburg (DE)
(72) Erfinder: TIEDE, Rüdiger, 46562 Voerde (DE); BÖGER, Thorsten, 47228 Duisburg (DE)
(74) Vertreter: Cohausz & Florack
(86) Internationale Anmeldenummer: PCT/EP2013/051620
(87) Internationale Veröffentlichungsnummer: WO 2013/156167

(56) Entgegenhaltungen:
- EP-B1- 1 431 026
- DE-A1- 4 228 444
- DE-A1-102007 046 226

## Beschreibung

Die Erfindung betrifft ein Verfahren zum Herstellen von Leichtblech, das einen Schichtaufbau aus mindestens zwei metallischen Decklagen und mindestens einer nichtmetallischen Kernschicht, die vorzugsweise aus Kunststoff gebildet ist, aufweist, insbesondere zur Verwendung im Fahrzeugbau, wobei mindestens eine der Decklagen aus mindestens zwei Metallblechen gebildet wird, die jeweils eine Dicke von weniger als 1 mm, vorzugsweise weniger als 0,6 mm aufweisen und miteinander im Stumpfstoß oder Überlappstoß kraft- und/oder stoffschlüssig verbunden werden.

In der EP 1 431 026 B1 ist ein Leichtblech beschrieben, das sich bei geringem Gewicht durch eine hohe Festigkeit auszeichnet und insbesondere für den Flugzeugbau, beispielsweise als Außenhaut für Flugzeug-Tragflügel vorgesehen ist. Dieses bekannte Leichtblech ist als Laminat ausgeführt. Es besteht aus wenigstens zwei Metalllagen und einer Bindelage aus faserverstärktem Kunststoff, die zwischen den Metalllagen angeordnet ist. Wenigstens eine der Metalllagen weist dabei Metallbleche auf, die durch eine Stumpfschweißung aneinander gefügt sind und eine Stärke (Dicke) von weniger als 1 mm besitzen. Die Schweißnaht, die durch die Stumpfschweißung bestimmt ist, weist eine Stärke auf, die vorzugsweise die gleiche wie die Stärke der Metallbleche ist. Die Metallbleche bestehen vorzugsweise aus Aluminium, Magnesium, Titan oder einer Legierung davon.

Bleche aus Aluminium, Magnesium, Titan oder einer Legierung aus diesen Metallen sind relativ teuer im Vergleich zu Blechen aus Stahlwerkstoff. Andererseits sind Bleche aus Stahlwerkstoff aber vergleichsweise schwer. In gewissen Grenzen ist es zwar möglich, das Gewicht eines Metallblechs bzw. eines daraus hergestellten Bauteils, insbesondere eines Karosseriebauteils zu verringern, indem die Dicke des Metallblechs reduziert wird.

Hinsichtlich der Herstellung von Bauteilen aus Metallblech, insbesondere Bauteilen aus Metallblech für Fahrzeuge (z.B. Kraftfahrzeuge, Nutzfahrzeuge und/oder Lastkraftwagen) ist es für eine optimale funktionale Auslegung der Bauteile häufig notwendig, den dafür verwendeten Werkstoff anforderungsgerecht, insbesondere belastungsgerecht auszulegen.

Der vorliegenden Erfindung liegt die Aufgabe zugrunde, ein Verfahren der eingangs genannten Art anzugeben, mit dem relativ kostengünstiges Leichtblech für eine wirtschaftliche Herstellung leichter und festigkeitsoptimierter Bauteile mit kleinen bis mittleren Abmessungen bereitgestellt werden kann.

Zur Lösung dieser Aufgabe wird ein Verfahren mit den Merkmalen des Anspruchs 1 vorgeschlagen.

Das erfindungsgemäße Verfahren ist dadurch gekennzeichnet, dass zur Herstellung mindestens einer der Decklagen Metallbleche unterschiedlicher Güte und/oder Dicke verwendet werden, wobei diese Metallbleche so bemessen oder ausgewählt werden, dass die daraus gebildete Decklage eine Breite kleiner 1350 mm, vorzugsweise kleiner 1200 mm aufweist. Mittels des erfindungsgemäßen Verfahrens ist es möglich, relativ kostengünstiges Leichtblech für eine wirtschaftliche Herstellung leichter und festigkeitsoptimierter Bauteile bereitzustellen. Als Metallbleche für die Herstellung des jeweiligen Deckblechs des Leichtblechs werden vorzugsweise Metallbleche aus Stahl, Aluminium, Magnesium oder einer Legierung davon verwendet. Besonders bevorzugt werden hierzu Metallbleche aus Stahlwerkstoff verwendet.

Hinsichtlich eines geringen Bauteilgewichts bei zugleich hoher Festigkeit, insbesondere Biegesteifigkeit, ist es vorteilhaft, wenn erfindungsgemäß zur Herstellung mindestens einer der Decklagen Metallbleche unterschiedlicher Güte und/oder Dicke verwendet werden. Ergänzend hierzu sieht eine vorteilhafte Ausgestaltung des erfindungsgemäßen Verfahrens vor, dass zur Herstellung mindestens einer der Decklagen Metallbleche aus Stahlwerkstoff verwendet werden, die partiell mit mindestens einem metallischen Verstärkungsblech versehen sind.

Für eine Vielzahl von Anwendungen von Leichtblech im Fahrzeugbau ist es ausreichend, wenn gemäß einer bevorzugten Ausführung des erfindungsgemäßen Verfahrens nicht mehr als zwei oder drei Metallbleche zur Herstellung mindestens einer der Decklagen des sandwichartigen Leichtblechs verwendet werden. Vorzugsweise weisen die für die Herstellung der jeweiligen Decklage verwendeten Metallbleche unterschiedliche Materialgüten auf, während ihre Dicke vorzugsweise gleich ist. Auf diese Weise lassen sich festigkeitsoptimierte Leichtbleche aus Metallblechen unterschiedlicher Materialgüte und mindestens einer nichtmetallischen Kernschicht, vorzugsweise aus Kunststoff, kostengünstig herstellen, ohne dass dabei der Aufwand für die kraft- und/oder stoffschlüssige Verbindung der Metallbleche der betreffenden Decklage(n) zu übermäßigen Kosten führt.

Nach einer weiteren bevorzugten Ausgestaltung des erfindungsgemäßen Verfahrens ist vorgesehen, dass die zur Herstellung der Decklage/n verwendeten Metallbleche jeweils eine Dicke im Bereich von 0,1 bis 0,5 mm, vorzugsweise kleiner/gleich 0,4 mm aufweisen. Auf diese Weise lassen sich festigkeitsoptimierte und zugleich leichte Sandwichbleche mit Decklagen aus Metallblechen unterschiedlicher Materialgüte und/oder Dicke und mindestens einer nichtmetallischen Kernschicht, vorzugsweise aus Kunststoff, erzielen. Die Dicke der nichtmetallischen Kernschicht bzw. Kunststoffschicht ist vorzugsweise größer als die Dicke der jeweiligen Decklage (Metallblechlage). Beispielsweise liegt die Dicke der Kern- bzw. Kunststoffschicht im Bereich von 0,2 bis 1,0 mm.

Bei den zur Herstellung der Decklage/n verwendeten Metallblechen kann es sich insbesondere um Platinen unterschiedlicher Güte, vorzugsweise innerhalb einer Basis-Metalllegierung, handeln. Die Verwendung von Platinen kann hinsichtlich der Herstellung kleinerer Mengen von Leichtblechen der hier interessierenden Art wirtschaftlich zweckmäßig sein, beispielsweise bei der Herstellung von Leichtblechen für die Fertigung von Kleinserien in relativ geringen Stückzahlen. Die aus mehreren Platinen zusammengesetzten festigkeitsoptimierten Leichtblechplatinen können dabei vorzugsweise in einer Transferpresse in Karosseriebauteile oder andere Fahrzeugbauteile umgeformt werden.

Alternativ dazu sieht eine andere bevorzugte Ausgestaltung des erfindungsgemäßen Verfahrens vor, dass die zur Herstellung der Decklage/n verwendeten Metallbleche Bänder sind. Die Verwendung von Metallbändern ist hinsichtlich einer Herstellung großer Mengen von Leichtblechen der hier interessierenden Art von Vorteil. Denn auf diese Weise lassen sich festigkeitsoptimierte Leichtblechbänder (Sandwichbänder) zur Weiterverarbeitung beispielsweise in Folgeverbundpressen herstellen.

Die Metallbleche zur Herstellung der jeweiligen Decklage werden vorzugsweise mittels Laserschweißen, Laserlöten oder Hochfrequenz-Schweißen miteinander stoffschlüssig verbunden. Diese Fügeverfahren sind jeweils zuverlässig und sehr leistungsfähig.

Eine weitere bevorzugte Ausgestaltung des erfindungsgemäßen Verfahrens sieht vor, dass die Metallbleche zur Herstellung der jeweiligen Decklage in einem kontinuierlichen Fügeprozess unter Herstellung einer länglichen Fügenaht miteinander stoffschlüssig verbunden werden. Auf diese Weise lassen sich die jeweiligen Metallbleche flüssigkeitsdicht miteinander verbinden. Zudem können auf diese Weise besonders stabile Fügeverbindungen erzielt werden.

Eine alternative, ebenfalls vorteilhafte Ausgestaltung des erfindungsgemäßen Verfahrens sieht dagegen vor, dass die Metallbleche zur Herstellung der jeweiligen Decklage in einem diskontinuierlichen Fügeprozess unter Herstellung z.B. einer Steppnaht miteinander stoffschlüssig verbunden werden.

Um das Leichtblech optimal an mechanische und/oder optische Anforderungen anzupassen, die an das daraus zu fertigende Bauteil gestellt werden, sieht eine weitere Ausgestaltung des erfindungsgemäßen Verfahrens vor, dass mindestens eine der Decklagen aus unterschiedlich breiten Metallblechen hergestellt wird. Durch die unterschiedlich breiten Metallbleche lassen sich sowohl die Festigkeitseigenschaften des Leichtblechs bzw. des daraus geformten Bauteils als auch das optische Erscheinungsbild des Bauteils verbessern. Diese Variante ist insbesondere dann von Vorteil, wenn nach einer weiteren bevorzugten Ausgestaltung des erfindungsgemäßen Verfahrens das Leichtblech mittels einer Umformanlage zu einem dreidimensionalen Bauteil umgeformt wird, wobei Fügenähte, die durch die miteinander verbundenen Metallbleche mindestens einer Decklagen definiert sind, so angeordnet werden, dass sie im fertig verbauten Zustand des Bauteils nicht sichtbar sind.

Eine weitere Ausgestaltung des erfindungsgemäßen Verfahrens sieht vor, dass zur Herstellung mindestens einer der Decklagen Metallbleche verwendet werden, die dergestalt zugeschnitten sind, dass sie über eine schräg zu einer ihrer Kanten, insbesondere Längskanten, verlaufende Fügenaht oder über eine kurvenförmige Fügenaht miteinander verbunden werden. Auch auf diese Weise lässt sich das Leichtblech gegebenenfalls sehr gut an mechanische Anforderungen anpassen, die an das daraus zu fertigende Bauteil gestellt werden.

Zur Erzielung langlebiger Bauteile sieht eine weitere bevorzugte Ausgestaltung des erfindungsgemäßen Verfahrens vor, dass zur Herstellung mindestens einer der Decklagen korrosionsschutzbeschichtete Metallbleche aus Stahlwerkstoff verwendet werden.

Nach einer weiteren bevorzugten Ausgestaltung der Erfindung ist vorgesehen, dass die Decklagen des Leichtblechs im Wesentlichen identisch ausgebildet werden. Die Vereinheitlichung der Decklagen ermöglicht eine besonders effektive Fertigung eines erfindungsgemäßen Leichtblechs; dies ist insbesondere dann von Vorteil, wenn die herzustellende Menge an Leichtblech vergleichsweise gering ist.

Hinsichtlich einer kostengünstigen Fertigung des hier in Rede stehenden Leichtblechs (Sandwichblechs) ist es ferner von Vorteil, wenn nach einer weiteren bevorzugten Ausgestaltung des erfindungsgemäßen Verfahrens die Decklagen und die mindestens eine dazwischen angeordnete Kernschicht in einer Doppelbandpresse miteinander verbunden werden.

Eine weitere Ausgestaltung des erfindungsgemäßen Verfahrens sieht vor, dass zur Herstellung der mindestens einen Kernschicht ein bis mindestens 150°C, vorzugsweise bis mindestens 220°C temperaturstabiler Kunststoff verwendet wird. Hierdurch wird ermöglicht, dass das Leichtblech bzw. ein daraus hergestelltes Bauteil durch eine kathodische Tauchlackierung einwandfrei beschichtet werden kann.

Der Begriff Kunststoff beinhaltet im vorliegenden Kontext vorzugsweise Thermoplaste. Denkbar ist auch die Verwendung von beispielsweise Kunstharz sowie Elastomeren. Die Kernschicht aus Kunststoff führt nicht nur zu einer Verringerung des Gewichts des aus dem Leichtblech hergestellten Bauteils, sie hat auch eine schalldämpfende, insbesondere körperschalldämpfende Wirkung.

Nachfolgend wird die Erfindung anhand einer mehrere Ausführungsbeispiele darstellenden Zeichnung näher erläutert. Es zeigen schematisch:
- Fig. 1a - 1f: mehrere Leichtblechformate, die aus unterschiedlich zugeschnittenen und/oder bemessenen Metallblechen mit spezifischen Fügenahtformen gebildet sind;
- Fig. 2a - 2e: Abschnitte verschiedener erfindungsgemäßer festigkeitsoptimierter Leichtbleche einschließlich deren Fügebereich, in einer Querschnittansicht;
- Fig. 3: ein erfindungsgemäßes bandförmiges Leichtblech in Draufsicht, aus dem in einer Doppel- oder Mehrfachpresse Karosseriebauteile, beispielsweise Innenbleche einer Fahrzeugtür, ausgestanzt werden; und
- Fig. 4: eine Doppelbandpresse zur Herstellung eines festigkeitsoptimierten Sandwichblechs (Leichtblechs) aus Deckblechen, die aus entlang ihrer Längskanten verbundenen Metallbändern gebildet sind, und einer Kernschicht aus Kunststoff, in einer perspektivischen Ansicht.

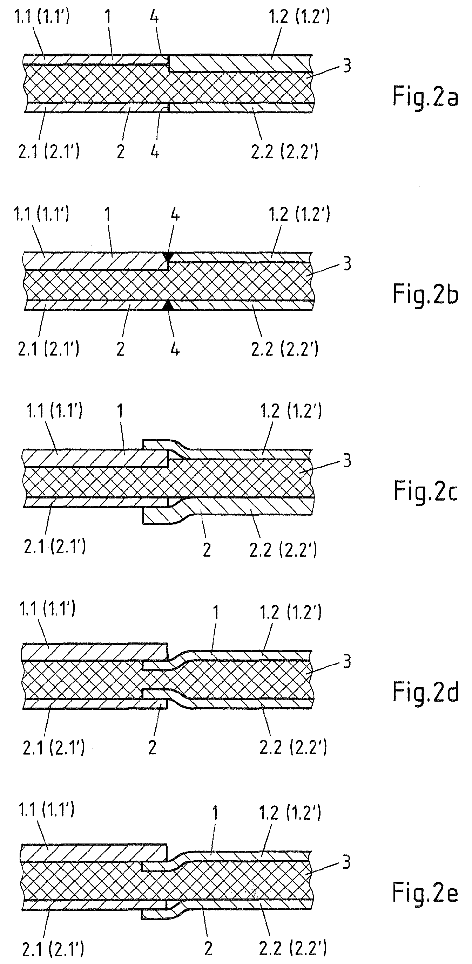

Das anhand der Zeichnung skizzierte erfindungsgemäße Verfahren dient der Herstellung von hinsichtlich seiner Belastbarkeit maßgeschneidertem Leichtblech, das aus mindestens zwei metallischen Decklagen 1, 2 und mindestens einer dazwischen angeordneten nichtmetallischen Kernschicht 3 aufgebaut ist (siehe z.B. Fig. 2a). Die Kernschicht 3 wird dabei vorzugsweise aus Kunststoff gebildet. Bei dem verwendeten Kunststoff kann es sich insbesondere um temperaturstabilen, für eine kathodische Tauchlackierung geeigneten Kunststoff handeln. Ein solcher Kunststoff ist beispielsweise bis mindestens 150°C, vorzugsweise bis mindestens 220°C temperaturstabil. Des Weiteren kann es sich bei dem verwendeten temperaturstabilen Kunststoff auch um einen faserverstärkten Kunststoff handeln.

In Abhängigkeit der aus dem Leichtblech (Sandwichblech) herzustellenden Bauteile werden zunächst Platinen 1.1, 1.2, 2.1, 2.2 (und ggf. 1.3, 2.3) oder Bänder 1.1', 1.2', 2.1', 2.2' aus Metall, vorzugsweise Stahlwerkstoff, mit unterschiedlicher Materialgüte und/oder Dicke im Stumpf- oder Überlappstoß entlang ihrer Kanten bzw. Längskanten aneinandergefügt. Die Dicke der hierzu verwendeten Platinen 1.1, 1.2, 1.3, 2.1, 2.2, 2.3 oder Blechbänder 1.1', 1.2', 2.1', 2.2' aus Stahlwerkstoff liegt vorzugsweise im Bereich von 0,1 mm bis 0,5 mm, besonders bevorzugt im Bereich von 0,1 mm bis 0,4 mm.

Als Ausgangsmaterial für die Platinen 1.1, 1.2, 1.3, 2.1, 2.2, 2.3 oder Bänder 1.1', 1.2', 2.1', 2.2' wird vorzugsweise kaltgewalztes Warmband (Stahlband) verwendet. Es handelt sich dabei beispielsweise um IF-Stahl (= Stahl mit ferritischer Matrix ohne interstiell gelöste Kohlenstoff- oder Stickstoffatome), Dualphasen-Stahl und/oder normale Feinblechgüten. Platinen oder Bänder aus Aluminium, Magnesium und/oder deren Legierungen können bei dem erfindungsgemäßen Verfahren ebenfalls als Ausgangsmaterial verwendet werden. Als Ausgangsmaterial für die erfindungsgemäßen Leichtbleche (Sandwichbleche) sind grundsätzlich alle gängigen Deckblechqualitäten, in allen produzierbaren Dickenbereichen denkbar, wobei allerdings Dicken kleiner/gleich 0,4 mm bevorzugt sind. Je nach Bedarf bzw. Anforderungen an das herzustellende Leichtblech wird das kaltgewalzte Warmband (Stahlband) geglüht, dressiert und anschließend vorzugsweise verzinkt. Bei der Verzinkung des kaltgewalzten Warmbandes handelt es sich um eine elektrolytische Verzinkung oder eine Feuerverzinkung. Das verzinkte Stahlband wird anschließend vorzugsweise mit Haftvermittler beschichtet. Aus dem so behandelten, vorzugsweise verzinkten und mit Haftvermittler beschichteten Band (Stahlband) werden dann Platinen 1.1, 1.2, 1.3, 2.1, 2.2, 2.3 geschnitten oder zwei oder mehrere solcher Bändern 1.1', 1.2', 2.1', 2.2' zu einem Band bzw. Coil gewünschter Breite aneinandergefügt.

Die Fügeverbindung der Platinen 1.1, 1.2, 1.3, 2.1, 2.2, 2.3 oder Bänder 1.1', 1.2', 2.1', 2.2' zur Herstellung der jeweiligen Decklage 1, 2 erfolgt zumindest abschnitts- oder punktweise kraft- und/oder stoffschlüssig. Vorzugsweise werden die Platinen 1.1, 1.2, 1.3, 2.1, 2.2, 2.3 oder Bänder 1.1', 1.2', 2.1', 2.2' stoffschlüssig mittels Laserschweißen, Laserlöten oder Hochfrequenz-Schweißen miteinander verbunden. Die Schweißnaht, insbesondere die Laserschweißnaht, wird vorzugsweise wiederum mit Haftvermittler beschichtet bzw. nachbehandelt.

Die aus Stahlblech in Form von Platinen 1.1, 1.2, 1.3, 2.1, 2.2, 2.3 oder Bändern 1.1', 1.2', 2.1', 2.2' mit unterschiedlicher Materialgüte und/oder Dicke zusammengesetzte Decklage 1 bzw. 2 weist erfindungsgemäß eine Breite kleiner 1350 mm, vorzugsweise kleiner 1200 mm auf.

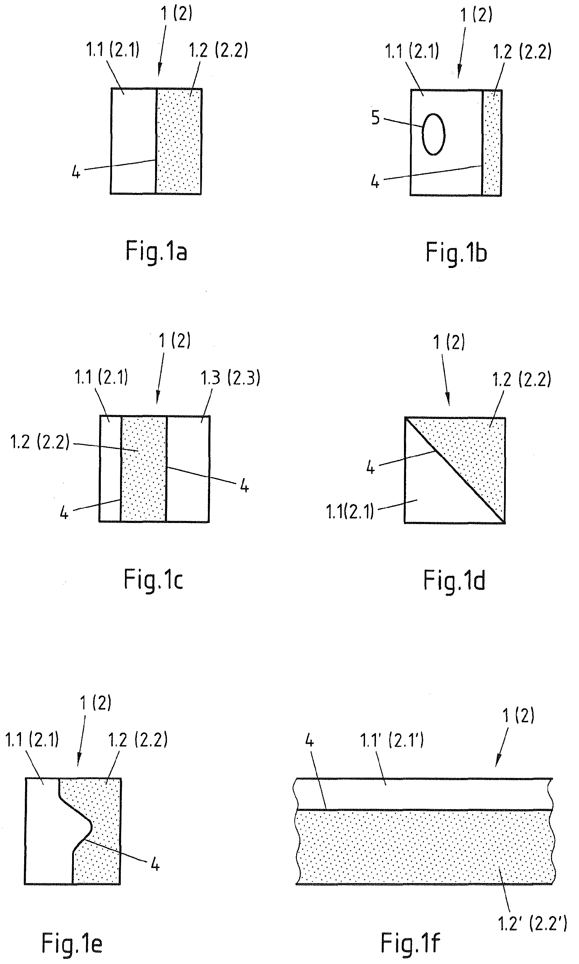

Wie in den Figuren 1a bis 1f skizziert, kann der Verlauf der Fügenaht 4 bzw. der Platinenzuschnitt unterschiedlich ausgeführt werden und damit an verschiedene Anforderungen, die an die aus dem Leichblech (Sandwichblech) hergestellten Bauteile gestellt werden, angepasst werden. Das Leichtblech gemäß Fig. 1a weist eine Decklage 1 oder 2 auf, die aus zwei im Wesentlichen gleich breiten, im Stumpfstoß aneinander gefügten Platinen 1.1, 1.2 oder 2.1, 2.2 gebildet ist und somit einen symmetrischen Fügenahtverlauf definiert, während die Decklage 1 oder 2 des Leichtblechs gemäß Fig. 1b aus zwei unterschiedlichen breiten Platinen 1.1, 1.2 bzw. 2.1, 2.2 zusammengesetzt ist und dementsprechend einen asymmetrischen Fügenahtverlauf aufweist, wobei die gleich breiten (Fig. 1a) oder unterschiedlich breiten Platinen 1.1, 1.2 (oder 2.1, 2.2), aus denen die Decklage 1 (oder 2) zusammengesetzt ist, unterschiedliche Werkstoffgüten besitzen. So kann beispielsweise die breitere Platine 1.1 (oder 2.1) aus einem höherfesten Stahl bestehen, wohingegen die schmalere Platine 1.2 (oder 2.2) aus einem eine geringere Zugfestigkeit aufweisenden Stahl gefertigt ist. Zudem kann mindestens eine der beiden Platinen der Decklage 1 oder 2 partiell mit mindestens einem metallischen Verstärkungsblech 5 versehen sein.

Fig. 1c zeigt ein Beispiel, bei dem die Decklage 1 oder 2 des Leichtblechs aus drei im Stumpfstoß aneinander gefügten Platinen 1.1, 1.2, 1.3 (oder 2.1, 2.2, 2.3) gebildet ist, wobei die Platinen 1.1, 1.2, 1.3 (oder 2.1, 2.2, 2.3) unterschiedlich breit ausgebildet bzw. bemessen sind und unterschiedliche Werkstoffgüten und/oder Dicken aufweisen. Vorzugsweise ist die mittlere Platine 1.2 (oder 2.3) der Decklage 1 (oder 2) gemäß Fig. 1c deutlich breiter als jede der beiden äußeren Platinen 1.1, 1.3 (oder 2.1, 2.3). Beispielsweise kann die Breite der jeweiligen äußeren Platine 1.1, 1.3 (oder 2.1, 2.3) nur ca. 10 bis 30% der Breite der mittleren Platine 1.2 (oder 2.2) betragen.

Bei dem in Fig. 1d skizzierten Beispiel ist die Decklage 1 oder 2 des Leichtblechs aus zwei dreieckigen Platinen 1.1, 1.2 (oder 2.1, 2.2) unterschiedlicher Materialgüte und/oder Dicke zusammengesetzt, die jeweils zwei im Wesentlichen rechtwinklig zueinander verlaufende Seitenkanten aufweisen. Die längeren Seitenkanten (Hypotenusen) definieren die schräg bzw. diagonal verlaufende Fügenaht 4.

Wie in Fig. 1e dargestellt, ist die Ausführung der vorliegenden Erfindung nicht auf Deckbleche bzw. Leichtbleche mit im Wesentlichen geradlinig verlaufenden Fügenähten 4 beschränkt. Die Stoßkanten bzw. Fügenähte 4 der aneinander gefügten Platinen 1.1, 1.2 (oder 2.1, 2.2) oder Blechbänder unterschiedlicher Materialgüte und/oder Dicke der erfindungsgemäßen Leichtbleche können auch kurvenförmig ausgebildet werden (siehe Fig. 1e).

In Fig. 1f ist eine bandförmige Decklage 1 (oder 2) eines erfindungsgemäßen Leichtblechs skizziert, die ähnlich dem Beispiel gemäß Fig. 1b aus unterschiedlich breiten Blechbändern 1.1', 1.2' (oder 2.1', 2.2') unterschiedlicher Materialgüte und/oder Dicke gebildet ist und dementsprechend ebenfalls eine asymmetrisch verlaufende Fügenaht 4 aufweist. In den Figuren 2a bis 2e sind Abschnitte erfindungsgemäßer Leichtbleche in Querschnittansicht gezeigt, wobei verschiedene Fügeverbindungen der Metallplatinen 1.1, 1.2, 2.1, 2.2 oder Metallbänder 1.1', 1.2' , 2.1', 2.2' der Decklagen 1, 2 dargestellt sind. Die Metallplatinen 1.1, 1.2, 2.1, 2.2 oder Metallbänder 1.1', 1.2', 2.1', 2.2', bei denen es sich vorzugsweise um Stahlplatinen oder Stahlbänder handelt, weisen unterschiedliche Materialgüten und/oder Dicken auf.

Fig. 2a zeigt ein Leichtblech, dessen Decklagen 1, 2 aus im Stumpfstoß durch Schweißen, vorzugsweise Laserschweißen aneinandergefügten Stahlblechen 1.1, 1.2, 2.1, 2.2 (oder 1.1', 1.2', 2.1', 2.2') gebildet sind. Das Laserschweißen der Stahlbleche kann dabei mit aber auch ohne Zusatzwerkstoff (z.B. Zusatzdraht) erfolgen.

Fig. 2b zeigt ein Ausführungsbeispiel eines Leichtblechs, dessen Decklagen 1, 2 aus im Stumpfstoß durch Löten, vorzugsweise Laserlöten aneinandergefügten Stahlblechen 1.1, 1.2, 2.1, 2.2 (oder 1.1', 1.2', 2.1', 2.2') gebildet sind.

In den Figuren 2c bis 2e sind Ausführungsbeispiele von Leichtblechen gezeigt, deren Decklagen 1, 2 jeweils aus im Überlappstoß aneinandergefügten Stahlblechen 1.1, 1.2, 2.1, 2.2 (oder 1.1', 1.2', 2.1', 2.2') gebildet sind. Die Stahlbleche 1.1, 1.2, 2.1, 2.2 (oder 1.1', 1.2', 2.1', 2.2') der jeweiligen Decklage 1, 2 sind zumindest punkt- oder abschnittsweise kraft- und/oder stoffschlüssig miteinander verbunden. Die Fügeverbindung kann beispielsweise als Steppnaht in einem diskontinuierlichen Fügeprozess hergestellt werden.

Die Fügeverbindungen (Fügenähte 4) der Decklagen 1, 2 können - wie in den Figuren 2a bis 2e dargestellt - übereinander angeordnet sein; alternativ kann die Fügeverbindung (Fügenaht 4) der einen Decklage 1 aber auch versetzt zu der Fügeverbindung (Fügenaht 4) der anderen Decklage 2 verlaufen.

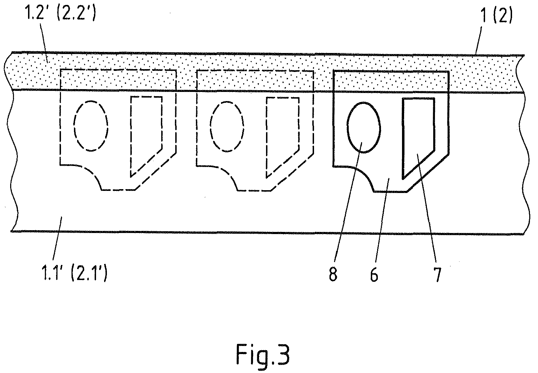

In Fig. 3 ist die Herstellung von Innenblechen einer Kraftfahrzeugtür aus einem erfindungsgemäßen Leichtblech (Sandwichblech) skizziert. Das hierzu verwendete Leichtblech besteht aus zwei Decklagen 1, 2, die über eine dazwischen angeordnete Schicht 3 aus Kunststoff stoffschlüssig verbunden sind und jeweils aus zwei entlang ihrer Längsränder im Stumpf- oder Überlappstoß aneinandergefügter, unterschiedlich breiter Metallbänder 1.1', 1.2', 2.1', 2.2' aus unterschiedlichen Stahlwerkstoffen gebildet sind. Die Metallbänder 1.1', 2.1' bestehen aus einem Stahlwerkstoff mit hoher Festigkeit. Eine relativ hohe Festigkeit wird für den zugeordneten Bereich der Fahrzeugtür gefordert, da in diesem Bereich unter anderem Scharniere befestigt werden und die Beanspruchung (Belastung) des Bauteils somit höher ist als im restlichen Bereich des Bauteils. Daher können die Metallbänder 1.2', 2.2' aus einem Stahlwerkstoff mit relativ geringer Festigkeit bestehen. Die Fügenaht 4 ist dabei vorzugsweise durchgehend ausgeführt. Die Fügenaht 4 bzw. der Überlappungsbereich der aneinandergefügten Metallbänder 1.1', 1.2', 2.1', 2.2' der jeweiligen Decklage 1 oder 2 liegt in Transportrichtung des Leichtblechbandes innerhalb der freizuschneidenen und durch Umformen herzustellenden Bauteile 6, beispielsweise Innenbleche für Fahrzeugtüren. Weitere Beschnitte 7, 8 können direkt oder zu einem späteren Zeitpunkt des Herstellungsprozesses erfolgen. Zum Umformen der freigeschnittenen Leichtblechabschnitte wird eine Doppel- oder Mehrfachpresse verwendet. Die Doppel- oder Mehrfachpresse kann dabei vorteilhaft als Folgeverbundpresse ausgeführt sein.

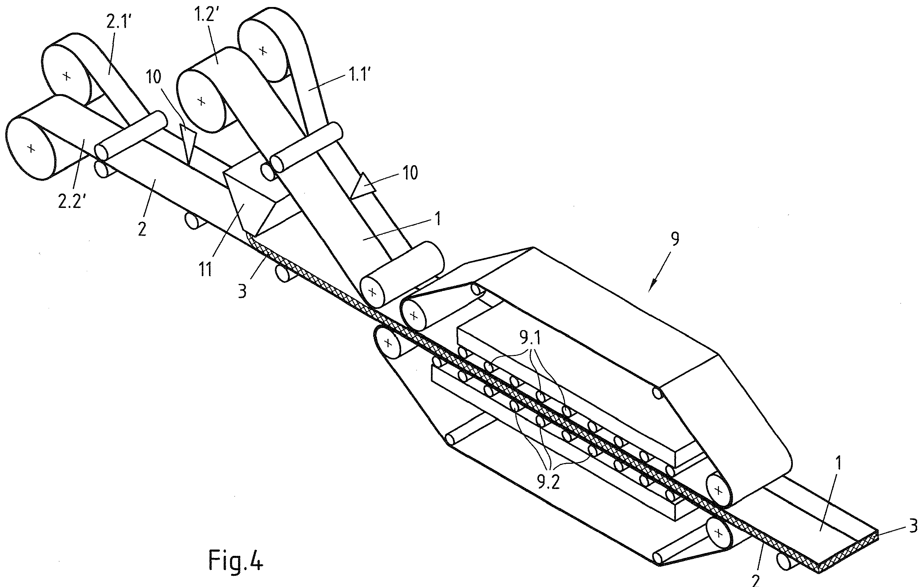

Die Herstellung erfindungsgemäßer Leichtbleche (Sandwichbleche) kann beispielsweise mittels einer Doppelbandpresse 9 durchgeführt werden (vgl. Fig. 4). Hierzu werden vorzugsweise im Stumpfstoß verbundene Stahlbänder 1.1', 1.2', 2.1', 2.2' unterschiedlicher Materialgüte und/oder Dicke als Decklagen 1, 2 oder einzelne, aus zwei oder mehreren Stahlplatinen unterschiedlicher Materialgüte und/oder Dicke gebildete Decklagen einer kontinuierlich arbeitenden Doppelbandpresse 9 zugeführt. Das Bezugszeichen 10 bezeichnet fokussierte Laserschweißstrahlen, die mittels nicht näher dargestellten Schweiß- oder Lötvorrichtungen erzeugt werden. Der Doppelbandpresse 9 ist eine Aufgabevorrichtung 11 vorgeordnet, mittels der auf eine der Decklagen eine Kernschicht 3 aus Kunststoff aufgetragen wird. Die Kernschicht kann als vorgefertigte Folie oder Kunststoffbahn auf die metallische Decklage 2 aufgetragen werden. Alternativ kann die Kernschicht 3 aber auch als fließfähige Kunststoffmasse mittels eines Aufgabetrichters 11 oder dergleichen auf die eine der beiden Decklagen 1, 2 aufgetragen werden. Mittels der Doppelbandpresse 9, die beheizte und/oder gekühlte Andruckrollen 9.1, 9.2 aufweisen kann, werden die Decklagen 1, 2 mit der dazwischen angeordneten Kernschicht 3 stoffschlüssig verpresst. Andere Verfahren bzw. Vorrichtungen zum Verbinden des Sandwichmaterials, insbesondere bei Überlappverbindungen der Metallbleche der Decklagen 1, 2, sind ebenfalls denkbar.

Die Ausführung der vorliegenden Erfindung ist nicht auf die vorstehend beschriebenen und in der Zeichnung dargestellten Ausführungsbeispiele beschränkt. Vielmehr sind zahlreiche Varianten umfasst, die auch bei einer von den dargestellten Beispielen abweichenden Ausführung von der in den beiliegenden Ansprüchen angegebenen Erfindung Gebrauch machen. So liegt es beispielsweise auch im Rahmen der Erfindung, Merkmale verschiedener Beispiele, insbesondere der Figuren 1a bis 1f, miteinander zu kombinieren.

## Patentansprüche

1. Verfahren zum Herstellen von Leichtblech, das einen Schichtaufbau aus mindestens zwei metallischen Decklagen (1, 2) und mindestens einer nichtmetallischen Kernschicht (3), die vorzugsweise aus Kunststoff gebildet ist, aufweist, insbesondere zur Verwendung im Fahrzeugbau, wobei mindestens eine der Decklagen (1, 2) aus mindestens zwei Metallblechen (1.1, 1.2, 1.3, 2.1, 2.2, 2.3; 1.1', 1.2', 2.1', 2.2') gebildet wird, die jeweils eine Dicke von weniger als 1 mm, vorzugsweise weniger als 0,6 mm aufweisen und miteinander im Stumpfstoß oder Überlappstoß kraft- und/oder stoffschlüssig verbunden werden, **dadurch gekennzeichnet, dass** zur Herstellung mindestens einer der Decklagen (1, 2) Metallbleche (1.1, 1.2, 1.3, 2.1, 2.2, 2.3; 1.1', 1.2', 2.1', 2.2') unterschiedlicher Güte und/oder Dicke verwendet werden, wobei diese Metallbleche (1.1, 1.2, 1.3, 2.1, 2.2, 2.3; 1.1', 1.2', 2.1', 2.2') so bemessen oder ausgewählt werden, dass die daraus gebildete Decklage (1, 2) eine Breite kleiner 1350 mm, vorzugsweise kleiner 1200 mm aufweist.

2. Verfahren nach Anspruch 1, **dadurch gekennzeichnet, dass** die verwendeten Metallbleche (1.1, 1.2, 1.3, 2.1, 2.2, 2.3; 1.1', 1.2', 2.1', 2.2') aus Stahlwerkstoff, Aluminiumwerkstoff und/oder Magnesiumwerkstoff bestehen.

3. Verfahren nach Anspruch 1 oder 2, **dadurch gekennzeichnet, dass** nicht mehr als zwei oder drei Metallbleche (1.1, 1.2, 1.3, 2.1, 2.2, 2.3; 1.1', 1.2', 2.1', 2.2') zur Herstellung mindestens einer der Decklagen (1, 2) verwendet werden.

4. Verfahren nach einem der Ansprüche 1 bis 3, **dadurch gekennzeichnet, dass** die zur Herstellung der Decklage/n (1, 2) verwendeten Metallbleche (1.1, 1.2, 1.3, 2.1, 2.2, 2.3; 1.1', 1.2', 2.1', 2.2') jeweils eine Dicke im Bereich von 0,1 bis 0,5 mm, vorzugsweise kleiner/gleich 0,4 mm aufweisen.

5. Verfahren nach einem der Ansprüche 1 bis 4, **dadurch gekennzeichnet, dass** die zur Herstellung der Decklage/n (1, 2) verwendeten Metallbleche Platinen (1.1, 1.2, 1.3, 2.1, 2.2, 2.3) sind.

6. Verfahren nach einem der Ansprüche 1 bis 4, **dadurch gekennzeichnet, dass** die zur Herstellung der Decklage/n (1, 2) verwendeten Metallbleche Metallbänder (1.1', 1.2', 2.1', 2.2') sind.

7. Verfahren nach einem der Ansprüche 1 bis 6, **dadurch gekennzeichnet, dass** die Metallbleche (1.1, 1.2, 1.3, 2.1, 2.2, 2.3; 1.1', 1.2', 2.1', 2.2') zur Herstellung der jeweiligen Decklage (1, 2) mittels Laserschweißen, Laserlöten oder Hochfrequenz-Schweißen miteinander stoffschlüssig verbunden werden.

8. Verfahren nach einem der Ansprüche 1 bis 7, **dadurch gekennzeichnet, dass** die Metallbleche (1.1, 1.2, 1.3, 2.1, 2.2, 2.3; 1.1', 1.2', 2.1', 2.2') zur Herstellung der jeweiligen Decklage (1, 2) in einem kontinuierlichen Fügeprozess unter Herstellung einer länglichen Fügenaht (4) miteinander stoffschlüssig verbunden werden.

9. Verfahren nach einem der Ansprüche 1 bis 7, **dadurch gekennzeichnet, dass** die Metallbleche (1.1, 1.2, 1.3, 2.1, 2.2, 2.3; 1.1', 1.2', 2.1', 2.2') zur Herstellung der jeweiligen Decklage (1, 2) in einem diskontinuierlichen Fügeprozess unter Herstellung einer Steppnaht miteinander stoffschlüssig verbunden werden.

10. Verfahren nach einem der Ansprüche 1 bis 9, **dadurch gekennzeichnet, dass** mindestens eine der Decklagen (1, 2) aus unterschiedlich breiten Metallblechen (1.1, 1.2, 1.3, 2.1, 2.2, 2.3; 1.1', 1.2', 2.1', 2.2') hergestellt wird.

11. Verfahren nach einem der Ansprüche 1 bis 10, **dadurch gekennzeichnet, dass** zur Herstellung mindestens einer der Decklagen (1, 2) zugeschnittene Metallbleche (1.1, 1.2, 2.1, 2.2) verwendet werden, die dergestalt zugeschnitten sind, dass sie über eine schräg zu einer ihrer Kanten, insbesondere Längskanten, verlaufende Fügenaht (4) oder über eine kurvenförmige Fügenaht (4) miteinander verbunden werden.

12. Verfahren nach einem der Ansprüche 1 bis 11, **dadurch gekennzeichnet, dass** zur Herstellung mindestens einer der Decklagen (1, 2) korrosionsschutzbeschichtete Metallbleche (1.1, 1.2, 1.3, 2.1, 2.2, 2.3; 1.1', 1.2', 2.1', 2.2') verwendet werden.

13. Verfahren nach einem der Ansprüche 1 bis 12, **dadurch gekennzeichnet, dass** zur Herstellung mindestens einer der Decklagen (1, 2) Metallbleche (1.1) verwendet werden, die partiell mit mindestens einem metallischen Verstärkungsblech (5) versehen sind.

14. Verfahren nach einem der Ansprüche 1 bis 13, **dadurch gekennzeichnet, dass** jede oder mindestens zwei der Decklagen (1, 2) entsprechend einem der Ansprüche 1 bis 13 hergestellt werden.

15. Verfahren nach einem der Ansprüche 1 bis 14, **dadurch gekennzeichnet, dass** die Decklagen (1, 2) und die mindestens eine dazwischen angeordnete Kernschicht (3) in einer Doppelbandpresse (9) miteinander verbunden werden.

16. Verfahren nach einem der Ansprüche 1 bis 15, **dadurch gekennzeichnet, dass** zur Herstellung der mindestens einen Kernschicht (3) ein bis mindestens 150°C, vorzugsweise bis mindestens 220°C temperaturstabiler Kunststoff verwendet wird.

## Claims

1. Method for producing lightweight sheet metal which comprises a layer structure made of at least two metallic cover layers (1,2) and at least one non-metallic core layer (3) that is preferably made of plastics material, in particular for use in automotive engineering, at least one of the cover layers (1, 2) is made of of at least two metal sheets (1.1,1.2,1.3, 2.1, 2.2, 2.3; 1.1',1.2', 2,1', 2.2') which each have a thickness of less than 1 mm, preferably of less than 0.6 mm, and are frictionally and/or integrally connected to one another by means of a butt joint or a lap joint, **characterised in that** metal sheets (1.1, 1.2, 1.3, 2.1, 2.2, 2.3; 1.1',1.2', 2.1', 2.2') of different quality and/or thickness are used to produce at least one of the cover layers (1, 2), these metal sheets (1.1, 1.2,1.3, 2.1, 2.2, 2.3; 1.1', 1.2', 2.1', 2.2') having such dimensions or being selected such that the cover layer (1, 2) formed thereby has a width of less than 1350 mm, preferably of less than 1200 mm.

2. Method according to claim 1, **characterised in that** the metal sheets used (1.1, 1.2, 1.3, 2.1, 2.2, 2.3; 1.1',1.2', 2.1', 2.2') consist of a steel-based material, aluminium-based material and/or magnesium-based material.

3. Method according to either claim 1 or claim 2, **characterised in that** no more than two or three metal sheets (1.1,1.2, 1.3, 2.1, 2.2, 2.3; 1.1', 1.2', 2.1', 2.2') are used to produce at least one of the cover layers (1,2).

4. Method according to any of claims 1 to 3, **characterised in that** the metal sheets (1.1, 1.2,1.3, 2.1, 2.2, 2.3; 1.1',1.2', 2.1', 2.2') used to produce the cover layer(s) (1, 2) each have a thickness in the range between 0.1 and 0.5 mm, preferably of less than or equal to 0.4 mm.

5. Method according to any of claims 1 to 4, **characterised in that** the metal sheets used to produce the cover layer(s) (1, 2) are blanks (1.1, 1.2, 1.3, 2.1, 2.2, 2.3).

6. Method according to any of claims 1 to 4, **characterised in that** the metal sheets used to produce the cover layer(s) (1, 2) are metal strips (1.1', 1.2', 2.1', 2.2').

7. Method according to any of claims 1 to 6, **characterised in that** the metal sheets (1.1, 1.2,1.3, 2.1, 2.2, 2.3; 1.1', 1.2', 2.1', 2.2') are integrally connected to one another by laser welding, laser soldering or high-frequency welding in order to produce each cover layer (1, 2).

8. Method according to any of claims 1 to 7, **characterised in that**, in order to produce each cover layer (1, 2), the metal sheets (1.1,1.2,1.3, 2.1, 2.2, 2.3; 1.1',1.2', 2.1', 2.2') are integrally connected to one another during a continuous joining process, thus producing an elongate joining seam (4).

9. Method according to any of claims 1 to 7, **characterised in that**, in order to produce each cover layer (1, 2), the metal sheets (1.1, 1.2,1.3, 2.1, 2.2, 2.3; 1.1', 1.2', 2.1', 2.2') are integrally connected to one another during a discontinuous joining process, thus producing a stich seam.

10. Method according to any of claims 1 to 9, **characterised in that** at least one of the cover layers (1, 2) is produced from metal sheets (1.1,1.2,1.3, 2.1, 2.2, 2.3; 1.1',1.2', 2.1', 2.2') of different widths.

11. Method according to any of claims 1 to 10, **characterised in that**, in order to produce at least one of the cover layers (1, 2), metal sheets (1.1, 1.2, 2.1, 2.2) that have been cut to size are used, which are cut to such a size that they are interconnected by means of a joining seam (4) that extends diagonally to one of the edges of said sheets, in particular a longitudinal edge, or by means of a curved joining seam (4).

12. Method according to any of claims 1 to 11, **characterised in that** metal sheets (1.1, 1.2, 1.3, 2.1, 2.2, 2.3; 1.1',1.2', 2.1', 2.2') having an anti-corrosion coating are used to produce at least one of the cover layers (1, 2).

13. Method according to any of claims 1 to 12, **characterised in that**, in order to produce at least one of the cover layers (1, 2), metal sheets (1.1) are used that are provided in part with at least one metallic reinforcement sheet (5).

14. Method according to any of claims 1 to 13, **characterised in that** each, or at least two, of the cover layers (1, 2) are produced according to any of claims 1 to 13.

15. Method according to any of claims 1 to 14, **characterised in that** the cover layers (1, 2) and the at least one core layer (3) arranged therebetween are interconnected in a double belt press (9).

16. Method according to any of claims 1 to 15, **characterised in that**, in order to produce the at least one core layer (3), a plastics material is used that withstands heat up to at least 150 °C, preferably up to at least 220 °C.

## Revendications

1. Procédé pour la fabrication de tôle légère, qui, présentant une structure en couches consistant en au moins deux couches de recouvrement (1, 2) métalliques et au moins une couche centrale (3) non métallique, de préférence en matière synthétique, est destinée à être utilisée en particulier dans la construction automobile, sachant qu'au moins l'une des couches de recouvrement (1, 2) est formée par au moins deux tôles métalliques (1.1,1.2, 1.3, 2.1, 2.2, 2.3 ; 1.1', 1.2', 2.1', 2.2'), qui présentent chacune une épaisseur inférieure à 1 mm, de préférence inférieure à 0,6 mm, et sont reliées ensemble de manière á être solidaire et / ou par liaison de matière, en joint bout à bout ou en chevauchement, **caractérisé en ce que**, pour la fabrication d'au moins l'une des couches de recouvrement (1, 2), on utilise des tôles métalliques (1.1, 1.2,1.3, 2.1, 2.2, 2.3 ; 1.1', 1.2', 2.1', 2.2') de qualité différente et / ou d'épaisseur différente, sachant que ces tôles métalliques (1.1, 1.2, 1.3, 2.1, 2.2, 2.3 ; 1.1', 1.2', 2.1', 2.2') sont dimensionnées ou choisies de sorte que la couche de recouvrement (1, 2), fabriquée avec elles, présente une largeur inférieure à 1350 mm, de préférence inférieure à 1200 mm.

2. Procédé selon la revendication 1,
**caractérisé en ce que** les tôles métalliques (1.1, 1.2, 1.3, 2.1, 2.2, 2.3 ; 1.1', 1.2', 2.1', 2.2') utilisées consistent en matériau en acier, en matériau en aluminium et / ou en matériau en magnésium.

3. Procédé selon revendication 1 ou 2,
**caractérisé en ce que** pas plus de deux ou de trois tôles métalliques (1.1, 1.2, 1.3, 2.1, 2.2, 2.3 ; 1.1',1.2', 2.1', 2.2') sont utilisées pour la fabrication d'au moins l'une des couches de recouvrement (1, 2).

4. Procédé selon l'une des revendications 1 à 3,
**caractérisé en ce que** les tôles métalliques (1.1, 1.2, 1.3, 2.1, 2.2, 2.3 ; 1.1', 1.2', 2.1', 2.2') utilisées pour la fabrication de la couche / des couches de recouvrement (1, 2), présentent chacune une épaisseur située dans une plage de 0,1 à 0,5 mm, de préférence inférieure / égale à 0,4 mm.

5. Procédé selon l'une des revendications 1 à 4,
**caractérisé en ce que** les tôles métalliques utilisées pour la fabrication de la couche / des couches de recouvrement (1, 2) sont des platines (1.1, 1.2, 1.3, 2.1, 2.2, 2.3).

6. Procédé selon l'une des revendications 1 à 4,
**caractérisé en ce que** les tôles métalliques utilisées pour la fabrication de la couche / des couches de recouvrement (1, 2) sont des bandes métalliques (1.1', 1.2', 2.1', 2.2').

7. Procédé selon l'une des revendications 1 à 6,
**caractérisé en ce que** les tôles métalliques (1.1,1.2,1.3, 2.1, 2.2, 2.3 ; 1.1',1.2', 2.1', 2.2') utilisées pour la fabrication de chacune des couches de recouvrement (1, 2) sont reliées ensemble par liaison de matière, par soudure au laser, brasage au laser ou soudure à haute fréquence.

8. Procédé selon l'une des revendications 1 à 7,
**caractérisé en ce que** les tôles métalliques (1.1, 1.2, 1.3, 2.1, 2.2, 2.3 ; 1.1', 1.2', 2.1', 2.2') utilisées pour la fabrication de chaque couche de recouvrement (1, 2), sont reliées ensemble par liaison de matière, au cours processus d'assemblage continu, au moyen d'un cordon de soudure longitudinal.

9. Procédé selon l'une des revendications 1 à 7,
**caractérisé en ce que** les tôles métalliques (1.1,1.2,1.3, 2.1, 2.2, 2.3 ; 1.1',1.2', 2.1', 2.2') utilisées pour la fabrication de chaque couche de recouvrement (1, 2), sont reliées ensemble par liaison de matière, au cours d'un processus d'assemblage discontinu, au moyen d'un cordon de soudure en ligne continue, par points.

10. Procédé selon l'une des revendications 1 à 9,
**caractérisé en ce que** l'une des couches de recouvrement (1, 2) au moins est fabriquée avec des tôles métalliques (1.1, 1.2,1.3, 2.1, 2.2, 2.3 ; 1.1', 1.2', 2.1', 2.2') de largeur différente.

11. Procédé selon l'une des revendications 1 à 10,
**caractérisé en ce que**, pour la fabrication d'au moins l'une des couches de recouvrement (1, 2), on utilise des tôles métalliques (1.1, 1.2, 2.1, 2.2) coupées sur mesure de sorte qu'elles puissent être reliées ensemble au moyen d'un cordon de soudure (4) s'étendant en biais par rapport à l'un de leurs bords, en particulier de l'un de leurs bords longitudinaux, ou par un cordon de soudure (4) courbe.

12. Procédé selon l'une des revendications 1 à 11,
**caractérisé en ce que**, pour la fabrication d'au moins l'une des couches de recouvrement (1, 2), on utilise des tôles métalliques (1.1,1.2,1.3, 2.1, 2.2, 2.3 ; 1.1',1.2', 2.1', 2.2') qui sont pourvues d'un revêtement de protection contre la corrosion.

13. Procédé selon l'une des revendications 1 à 12,
**caractérisé en ce que**, pour la fabrication d'au moins l'une des couches de recouvrement (1, 2), on utilise des tôles métalliques (1.1) qui sont partiellement pourvues d'au moins une tôle de renforcement métallique (5).

14. Procédé selon l'une des revendications 1 à 13,
**caractérisé en ce que** chacune ou au moins deux des couches de recouvrement (1, 2) est / sont fabriquée/s selon l'une des revendications 1 à 13.

15. Procédé selon l'une des revendications 1 à 14,
**caractérisé en ce que** les couches de recouvrement (1, 2) et l'au moins une couche centrale (3), disposée entre elles, sont reliées ensemble dans une presse à double bande (9).

16. Procédé selon l'une des revendications 1 à 15,
**caractérisé en ce que**, pour la fabrication de la couche centrale (3) au moins prévue, on utilise une matière synthétique, stable à une température allant au moins jusqu'à 150°C, de préférence au moins jusqu'à 220°C.
